# EUROPEAN PATENT APPLICATION

(11) **EP 3 410 298 A1**
(43) Date of publication of application: **05.12.2018**
(21) Application number: 18174161.2
(22) Date of filing: 24.05.2018
(51) Int. Cl.: G06F 9/451

(54) **METHOD FOR SEARCHING APPLICATION AND RELATED PRODUCTS**

(30) Priority: 31.05.2017 CN 201710401130
(71) Applicant: Guangdong Oppo Mobile Telecommunications Corp., Ltd, Dongguan, Guangdong 523860 (CN)
(72) Inventor: BAI, Jian, Chang'an Dongguan, Guangdong (CN)
(74) Representative: Johnson, Richard Alan

(57) **Abstract**

Provided is a method for searching an application and related products, and the method includes the follows. A first interface is displayed by the terminal equipment. The terminal equipment includes the first interface and a second interface. The first interface contains an icon of a first application and an interface. The second interface is established according to an application type and contains an application icon of the application type corresponding to the second interface. An instruction for selecting the application type corresponding to the second interface is received. The second interface is switched to. A terminal equipment is also provided.

## Description

### TECHNICAL FIELD

The present disclosure relates to the field of computers, and particularly to a method for searching an application and related products.

### BACKGROUND

An icon is a computer graphic with a well-defined meaning. A desktop icon is a software identity and an icon in an interface is a functional identity.

Regarding a terminal equipment, an icon on a desktop is usually an entrance to an application. After seeing the icon, users can know which application it is: software or a client-side application. After the icon is clicked, the terminal equipment can open an application corresponding to the icon.

When the user tries to find an application, he or she needs to find a corresponding icon.

Currently, in order to allow the user to find an icon quickly, one solution is to display frequently used application icons (icons of frequently used application) in a first interface, so that the user can see these icons in the first interface and quickly find the icon needed.

However, the above solution has a problem: for non-frequently used application icons (icons of non-frequently used application), it will be more difficult for the user to find them, as a result, the operational efficiency becomes very low.

### SUMMARY

Embodiments of the present disclosure provide a method for searching an application and related products, so as to accelerate the speed to find an application and improve operational efficiency.

According to a first aspect of embodiments of the present disclosure, there is provided a method for searching an application. The method includes the follows.

A first interface is displayed by the terminal equipment. The terminal equipment includes the first interface and a second interface. The first interface contains a first application icon (an icon of a first application) and an interface. The interface is configured for selecting an application type. The second interface is established according to an application type and contains an application icon of the application type corresponding to the second interface. An instruction for selecting the application type corresponding to the second interface is received. The second interface is switched to.

According to a second aspect of embodiments of the present disclosure, there is provided a terminal equipment. The terminal equipment includes a processor coupled to a memory configured to store instructions, which when executed by the processor, become operable with the processor to execute the following units.

A displaying unit is configured to display a first interface, wherein the terminal equipment includes the first interface and a second interface.

A receiving unit is configured to receive an instruction for selecting the application type corresponding to the second interface.

A switching unit is configured to switch to the second interface.

The first interface contains a first application icon and an interface. The interface is configured for selecting an application type. The second interface is established according to an application type and contains an application icon of the application type corresponding to the second interface.

According to a third aspect of embodiments of the present disclosure, there is provided a terminal equipment. A processor coupled to a memory configured to store instructions, which when executed by the processor, become operable with the processor to execute the following units.

The input-output unit is configured to receive data and output data.

The processing unit is configured to control to display a first interface. The terminal equipment includes the first interface and a second interface.

The first interface contains a first application icon and an interface. The interface is configured for selecting an application type. The second interface is established according to an application type and contains an application icon of the application type corresponding to the second interface.

The processing unit is further configured to switch to the second interface, after receiving an instruction for selecting the application type corresponding to the second interface.

According to a fourth aspect of embodiments of the present disclosure, there is provided a terminal equipment. The terminal equipment includes one or more processors, a memory, a communication interface, and one or more programs.

The one or more programs are stored in the memory and include instructions, which when executed, become operable with the one or more processors to execute procedures of any method of the embodiments of the present disclosure.

According to a fifth aspect of embodiments of the present disclosure, there is provided a computer readable storage medium storing computer programs configured for electronic data interchange. When executed, the computer programs become operable with a computer to execute any method of the embodiments of the present disclosure. The computer includes a terminal equipment.

According to a sixth aspect of embodiments of the present disclosure, there is provided a computer program product. The computer program product includes a non-transitory computer readable storage medium storing computer programs. The computer programs are operable with a computer to perform all or part of the operations of any of the methods described in the above method embodiments. The computer program product may be a software installation package. The computer includes a terminal equipment.

### BRIEF DESCRIPTION OF THE DRAWINGS

The drawings referred to in the embodiments of the present disclosure will be briefly described.
FIG. 1 is a schematic flow chart diagram illustrating a method for searching an application of an embodiment of the present disclosure.
FIG. 2 is diagram of a first interface of an embodiment of the present disclosure.
FIG. 3 is another diagram of the first interface of an embodiment of the present disclosure.
FIG. 4 is another diagram of the second interface of an embodiment of the present disclosure.
FIG. 5 is a structure diagram of a terminal equipment of an embodiment of the present disclosure.
FIG. 6 is a structure diagram of a terminal equipment of an embodiment of the present disclosure.
FIG. 7 is a structure diagram of a terminal equipment of an embodiment of the present disclosure.
FIG. 8 is a structure diagram of a terminal equipment of an embodiment of the present disclosure.

### DETAILED DESCRIPTION OF ILLUSTRATED EMBODIMENTS

Technical solutions of the present disclosure will be described clearly and completely with reference to the accompanying drawings; obviously, the embodiments described below are merely part of rather than all of the embodiments of the present disclosure. Based on the embodiments of the present disclosure, other embodiments obtained there from without any creative work by those of ordinary skill in the art shall fall into the protection scope of the present disclosure.

The terms "first", "second" and the like in the specification and claims of the present disclosure and the drawings are used for distinguishing different objects rather than describing a specific order. In addition, terms of "including" and "having" and any inflexions thereof are intended to cover a non-exclusive inclusions relationship. For example, processes, methods, systems, products or devices containing a series of operations or units are not limitative to listed processes or units, other processes or units which are not listed can also be included, or other processes or units inherent to these processes, methods, products or devices can also be included.

The term "embodiment" or "implementation" referred to herein means that a particular feature, structure, or feature described in conjunction with the embodiment may be contained in at least one embodiment of the present disclosure. The phrase appearing in various places in the specification does not necessarily refer to the same embodiment, nor does it refer to an independent or alternative embodiment that is mutually exclusive with other embodiments. It is expressly and implicitly understood by those skilled in the art that an embodiment described herein may be combined with other embodiments.

The terminal equipment involved in the embodiments of the present disclosure may include various handheld devices having wireless communication functions, in-vehicle devices, wearable devices, computing devices or other processing devices connected to the wireless modem, as well as various forms of user equipments (UE), mobile stations (MS), terminal devices, and the like. For the convenience of description, the above-mentioned devices are collectively referred to as a terminal equipment.

The first application involved in the embodiments of the present disclosure may include a frequently used application or a user's favorite application. Correspondingly, the second application involved in the embodiments of the present disclosure may include a non-frequently used application or a non-favorite application. In addition, the first application and the second application may refer to two types of applications and these two types are user-defined. In an implementation, the frequently used application or the user's favorite application can refer to an application a usage frequency of which is higher than a preset threshold in a preset time period. The non-frequently used application or the non-favorite application can refer to an application a usage frequency of which is lower than another preset threshold in a preset time period.

According to a first aspect of embodiments of the present disclosure, there is provided a method for searching an application. The method includes the follows.

A first interface is displayed by the terminal equipment. The terminal equipment includes the first interface and a second interface.

The first interface contains a first application icon(s) (or an icon(s) of a first application(s)) and an interface. The interface is configured for selecting an application type. The second interface is established according to an application type and contains an application icon(s) of the application type corresponding to the second interface. The application icon(s) of the application type corresponding to the second interface can also be referred as application icon(s) to which application(s) corresponding to belong(s) to the application type corresponding to the second interface.

An instruction for selecting the application type corresponding to the second interface is received.

The second interface is switched to.

In one implementation, the interface includes an application type selection icon occupying one application icon location.

In one implementation, the method further includes the follows after the application type selection icon is pressed. A form is displayed. The form contains prompt information for prompting the application type of the second interface.

In one implementation, an instruction for selecting the application type corresponding to the second interface is received as follows. A selection operation of the prompt information for prompting the application type of the second interface is received.

In one implementation, the application type corresponding to the second interface includes at least one of: an application type determined according to a standard classification definition of an application; an application type determined according to a user-defined application type; an application type determined according to both the standard classification definition of an application and the user-defined application type.

In one implementation, the icon contained in the second interface is a second application icon (or an icon of a second application). The second application is associated with (relative to) the first application.

In one implementation, a usage frequency of the first application is higher than that of the second application.

In one implementation, the first application and the second application can be defined by a user.

In one implementation, the method further includes the follows. A usage frequency of each application of the terminal equipment is counted periodically. An application icon associated with the second application is moved from the first interface to the second interface according to an application type of the application; or an application icon associated with the first application is moved from the second interface to the first interface.

According to a second aspect of embodiments of the present disclosure, there is provided a terminal equipment. The terminal equipment includes a processor coupled to a memory configured to store instructions, which when executed by the processor, become operable with the processor to execute the following units.

A displaying unit is configured to display a first interface, wherein the terminal equipment includes the first interface and a second interface.

A receiving unit is configured to receive an instruction for selecting the application type corresponding to the second interface.

A switching unit is configured to switch to the second interface.

The first interface contains a first application icon and an interface. The interface is configured for selecting an application type. The second interface is established according to an application type and contains an application icon of the application type corresponding to the second interface.

In one implementation, the interface includes an application type selection icon occupying one application icon location.

In one implementation, the displaying unit is further configured to display a form, wherein the form contains prompt information for prompting the application type of the second interface.

In one implementation, the receiving unit is further configured to receive a selection operation of the prompt information for prompting the application type of the second interface.

In one implementation, the application type corresponding to the second interface includes at least one of: an application type determined according to a standard classification definition of an application; an application type determined according to a user-defined application type; an application type determined according to both the standard classification definition of an application and the user-defined application type.

In one implementation, the icon contained in the second interface is a second application icon. The second application is associated with the first application.

In one implementation, a usage frequency of the first application is higher than that of the second application.

In one implementation, the instructions are further configured to execute the following units.

A counting unit is configured to count a usage frequency of each application of the terminal equipment periodically.

An icon control unit is configured to move an application icon associated with the second application from the first interface to the second interface according to an application type of the application; or move an application icon associated with the first application from the second interface to the first interface.

According to a third aspect of embodiments of the present disclosure, there is provided a terminal equipment. The terminal includes a processor coupled to a memory configured to store instructions, which when executed by the processor, become operable with the processor to execute the following units.

An input-output unit is configured to receive data and output data.

A processing unit is configured to control to display a first interface. The terminal equipment includes the first interface and a second interface.

The first interface contains a first application icon and an interface. The interface is configured for selecting an application type. The second interface is established according to an application type and contains an application icon of the application type corresponding to the second interface.

The processing unit is further configured to switch to the second interface, after receiving an instruction for selecting the application type corresponding to the second interface.

In one implementation, the interface includes an application type selection icon occupying one application icon location.

In one implementation, the processing unit is further configured to display a form after the application type selection icon is pressed. The form contains prompt information for prompting the application type of the second interface.

In one implementation, the application type corresponding to the second interface includes at least one of: an application type determined according to a standard classification definition of an application; an application type determined according to a user-defined application type; an application type determined according to both the standard classification definition of an application and the user-defined application type.

According to a fourth aspect of embodiments of the present disclosure, there is provided a terminal equipment. The terminal equipment includes one or more processors, a memory, a communication interface, and one or more programs.

The one or more programs are stored in the memory and include instructions, which when executed, become operable with the one or more processors to execute procedures of any method of the embodiments of the present disclosure.

According to a fifth aspect of embodiments of the present disclosure, there is provided a computer readable storage medium storing computer programs configured for electronic data interchange. When executed, the computer programs become operable with a computer to execute any method of the embodiments of the present disclosure. The computer includes a terminal equipment.

According to a sixth aspect of embodiments of the present disclosure, there is provided a computer program product. The computer program product includes a non-transitory computer readable storage medium storing computer programs. The computer programs are operable with a computer to perform all or part of the operations of any of the methods described in the above method embodiments. The computer program product may be a software installation package. The computer includes a terminal equipment.

As can be seen, by means of the embodiments of the present disclosure, an interface and a first application icon are provided in a first interface. The second interface is established according to an application type, therefore the second interface has enough space to accommodate second application icons. A user can access the first application through the first application icon quickly, and regarding second applications, the user can search an interface corresponding to the second applications through the interface quickly, so as to find the second application icons quickly. Therefore speed to find the second applications is improved while user's operating habits of the first application are maintained, therefore, operational efficiency is improved.

Embodiments of the present disclosure will be described with reference to the accompanying drawings in the following.

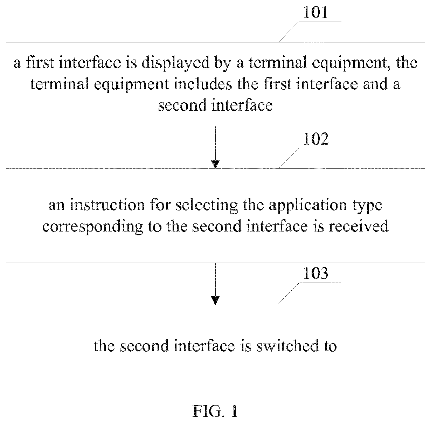

Referring to FIG. 1, FIG. 1 is a schematic flow chart diagram illustrating a method for searching an application. The method is applicable to a terminal equipment. As illustrated in FIG. 1, the method for searching an application can begin at block 101.

At block 101, a first interface is displayed by a terminal equipment. The terminal equipment includes the first interface and a second interface.

In this embodiment of the present disclosure, both the first interface and the second interface are interfaces of the terminal equipment rather than interfaces of applications. Generally speaking, the first interface may be a first interface displayed after the terminal equipment is powered on, and may be generally referred to as a main interface.

The first interface contains a first application icon(s) and an interface. The second interface is established according to an application type. The second interface contains an application icon(s) of the application type corresponding to the second interface. The first interface can contain one or more application icons. The second interface can contain one or more application icons. The terminal equipment can include one or more second interfaces. When the terminal equipment can include multiple second interfaces, each second interfaces corresponds to a kind of application type.

The first application is associated with a second application. In one implementation, a usage frequency of the first application is higher than that of the second application. In one implementation, the first application refers to applications most frequently used of the terminal equipment. In addition, the first application and the second application can be defined by a user of the terminal equipment. The first application icon may be an icon of a user-defined first application. For example, for applications that do not have the highest usage frequency but the user is accustomed to placing these application icons in the first interface, the user can move these icons to the first interface in a self-defined way. In this condition, the applications corresponding to these icons can also be considered as the first application, or these application icons can be considered as first application icons.

The type of applications can be user-defined, or can be a standard application classification, for example, office APP, games APP, social APP, tools APP and the like.

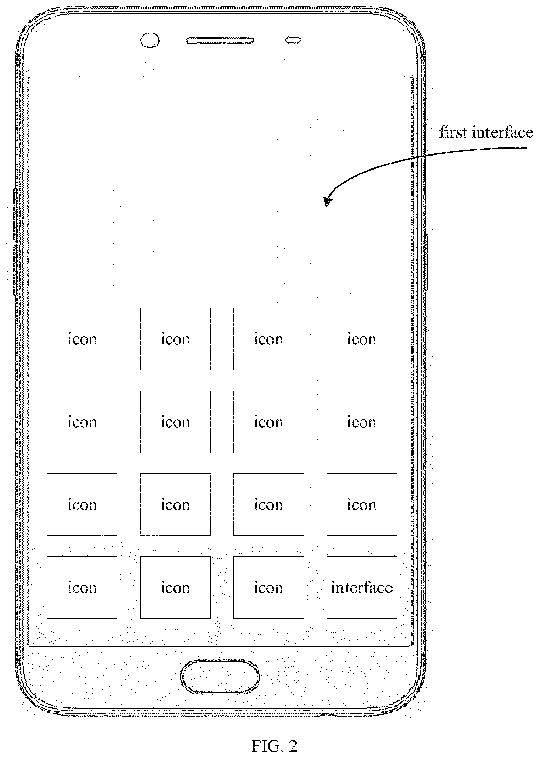

FIG. 2 illustrates an example of the first interface of an embodiment of the present disclosure. The first interface illustrated in FIG. 2 contains first application icons and an application type selection icon (selection interface in FIG. 2).

In the embodiment of the present disclosure, the second interface is a general term, that is, an interface containing a second application icon(s). Interfaces of second applications are distinguished according to categories of the second applications, therefore there can be more than one second interface.

At block 102, an instruction for selecting the application type corresponding to the second interface is received.

At block 103, the second interface is switched to.

In the embodiment of the present disclosure, the interface and the first application icons are provided in a first interface. The second interface is established according to the application type, therefore the second interface has enough space to accommodate second application icons. A user can access the first application through the first application icon quickly, and regarding the second applications, the user can search an interface corresponding to the second applications quickly through the interface, so as to find the second application icons quickly. Therefore speed to find the second applications is improved while user's operating habits of the first application are maintained, therefore, operational efficiency is improved.

In one implementation, an expression of the interface is also provided as follows. The interface includes an application type selection icon occupying one application icon location.

In the embodiment of the present disclosure, the application type selection icon occupies one application icon location, so that an overall interface layout will not be changed, user habits are more conformed, and the terminal equipment can be more easily used. The application type selection icon is named after a functional naming convention, so that any icon with an application type selection function and can indicate that this is an icon for application type selection, can be used. With regarding to the names of the icons, the disclosure is not limited thereto.

In one implementation, a specific form of the application type corresponding to the second interface is also provided as follows. The application type corresponding to the second interface includes at least one of: an application type determined according to a standard classification definition of applications, an application type determined according to a user-defined application type, and an application type determined according to both the standard classification definition of applications and the user-defined application type.

In the embodiment of the present disclosure, an interface is established according to an application type. The interface here refers to a main interface or an attached interface rather than an interface of an application. In addition, one application type usually corresponds to more than one application, multiple application icons may exist in one interface.

The user-defined application type does not always refer to that the user inputs information such as an application belongs to some kind of application. As long as the user inputs information that may lead to the application to be classified to an interface of an application type, it can be understood that the user defines a type of the application. For example, the user moves all or part of tool applications to an interface corresponding to an office application, the moved tool applications can be considered as user-defined office applications. A standard classification of applications usually follows a habitual classification manner, for example, application type classification in the current application market.

In one implementation, a criterion for demarcating the first application and the second application is clarified further in the embodiment of the present disclosure as follows. The icon contained in the second interface is a second application icon. A usage frequency of the first application is higher than that of the second application.

It should be noted that, as mentioned above, the user can define whether an icon is the first application icon, therefore the usage frequency should not be understood as the only criterion for classifying the first application and the non- first application.

In one implementation, an updating manner of application icons is provided. The method further includes the follows.

A usage frequency of each application of the terminal equipment is counted periodically.

An application icon associated with the second application is moved from the first interface to the second interface according to an application type of the application, or an application icon associated with the first application is moved from the second interface to the first interface.

In the embodiment of the present disclosure, it is inadvisable to set a period of counting the usage frequency too short, generally it may be a week or a few days, and it is also possible to set a longer period. The above examples should not be understood as any limitation to the period of the embodiments of the present disclosure.

In one implementation, a solution to facilitate the user to access the second interface accurately is also provided. The method can further include the follows after the application type selection icon is pressed. A form is displayed. The form contains prompt information for prompting the application type of the second interface.

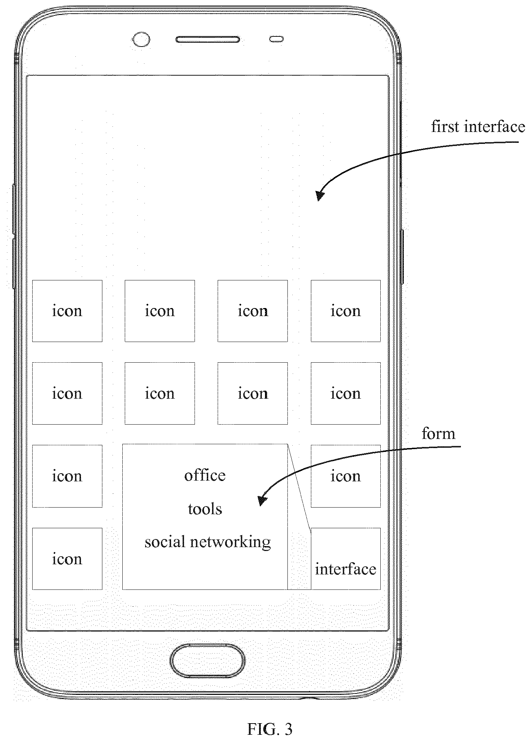

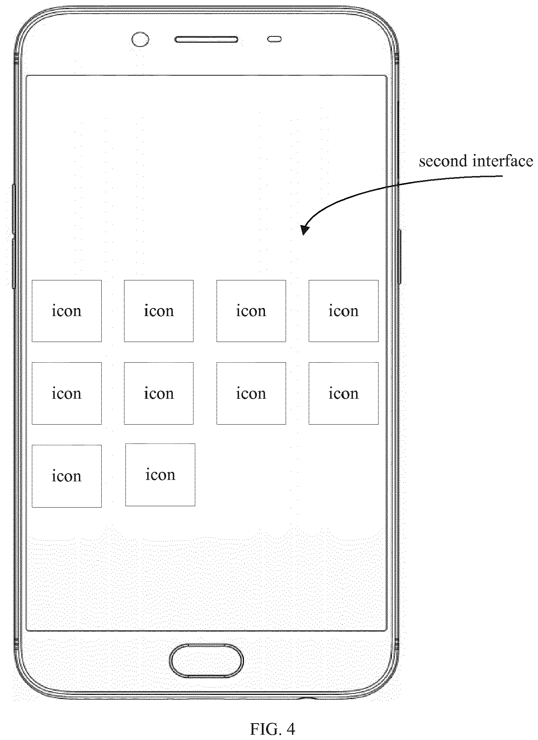

In the embodiment of the present disclosure, by displaying the prompt information of the application type in the form as illustrated in FIG. 3, the user can find a corresponding application type accurately, a situation in which accessing of the second interface is failed since the user does not know the application type can be avoided. When the user chooses an application type in the form, a second interface corresponding to the application type chose by the user can be displayed by the terminal equipment. For example, when the user chooses an application type of office in the form, a second interface corresponding to the application type of office can be displayed by the terminal equipment as illustrated in FIG. 4. The second interface includes application icons of the application type of office.

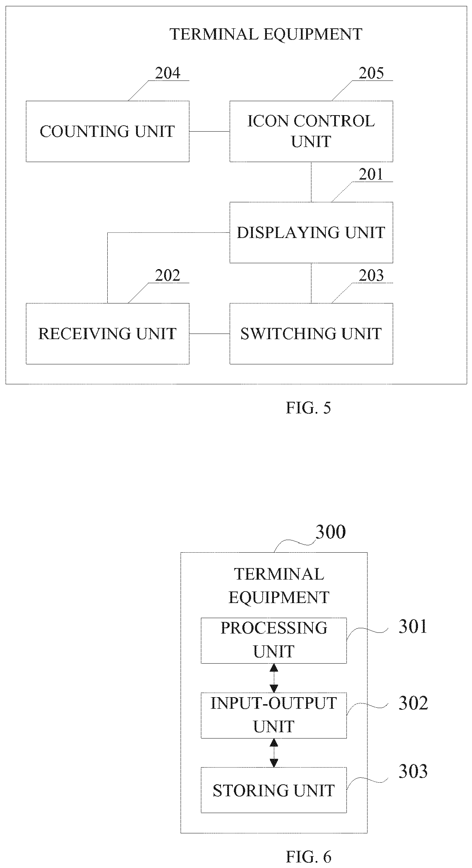

As illustrated in FIG. 5, a terminal equipment is also provided in an embodiment of the present disclosure. The terminal equipment includes a displaying unit 201, a receiving unit 202, and a switching unit 203.

The displaying unit 201 may be a display screen. For example, a liquid crystal display (LCD), an organic light-emitting diode (OLED) display and the like.

The receiving unit 202 can be a detector or a pressure sensor. The displaying unit 201 and the receiving unit 202 can be disposed integrally or separately.

The switching unit 203 can be a processor, a circuit, control components coupled to or integrated in the processor.

The displaying unit 201 is configured to display a first interface. The terminal equipment includes the first interface and a second interface.

The first interface contains a first application icon(s) and an interface. The interface is configured for selecting an application type. The second interface is established according to an application type. The second interface contains a application icon(s) of the application type corresponding to the second interface.

The receiving unit 202 is configured to receive an instruction for selecting the application type corresponding to the second interface.

The switching unit 203 is further configured to switch to the second interface, after the receiving unit 202 receives the instruction for selecting the application type corresponding to the second interface.

The displaying unit 201 is further configured to display the second interface.

In this embodiment of the present disclosure, both the first interface and the second interface are interfaces of the terminal equipment rather than interfaces of applications. Generally speaking, the first interface may be a first interface displayed after the terminal equipment is powered on, and may be generally referred to as a main interface.

The first application is associated with a second application. A usage frequency of the first application is higher than that of the second application. Generally speaking, the first application refers to applications most frequently used of the terminal equipment. In addition, the first application icon may be an icon of a user-defined first application. For example, for applications that do not have the highest usage frequency but the user is accustomed to placing these application icons in the first interface, the user can move these icons to the first interface in a self-defined way. In this condition, the applications corresponding to these icons can also be considered as the first application, or these application icons can be considered as first application icons.

The type of applications can be user-defined, and can be a standard application classification, for example, office APP, games APP, social APP, tools APP and the like.

FIG. 2 illustrates an example of an interface of an embodiment of the present disclosure. The interface is the first interface and contains first application icons and an application type selection icon.

In the embodiment of the present disclosure, the second interface is a general term, that is, an interface containing a second application icon. Interfaces of second applications are distinguished according to categories of the second applications, therefore there can be more than one second interface.

In the embodiment of the present disclosure, the interface and the first application icon is provided in a first interface. The second interface is established according to the application type, therefore the second interface has enough space to accommodate second application icons. A user can access the first application through the first application icon quickly, and regarding the second applications, the user can search an interface corresponding to the second applications quickly through the interface, so as to find the second application icons quickly. Therefore speed to find the second applications is improved while user's operating habits of the first application are maintained, therefore, operational efficiency is improved.

In one implementation, an expression of the interface is also provided as follows. The interface includes an application type selection icon occupying one application icon location.

In the embodiment of the present disclosure, the application type selection icon occupies one application icon location, so that an overall interface layout will not be changed, user habits are more conformed, and the terminal equipment can be more easily used. The application type selection icon is named after a functional naming convention, so that any icon with an application type selection function and can indicate that this is an icon for application type selection, can be used. With regarding to the names of the icons, the disclosure is not limited thereto.

In one implementation, a specific form of the application type corresponding to the second interface is also provided as follows. The application type corresponding to the second interface includes at least one of: an application type determined according to a standard classification definition of applications, an application type determined according to a user-defined application type, and an application type determined according to both the standard classification definition of applications and the user-defined application type.

In the embodiment of the present disclosure, an interface is established according to an application type. The interface here refers to a main interface or an attached interface rather than an interface of an application. In addition, one application type usually corresponds to more than one application, multiple application icons may exist in one interface.

The user-defined application type does not always refer to that the user inputs information such as an application belongs to some kind of application. As long as the user inputs information that may lead to the application to be classified to an interface of an application type, it can be understood that the user defines a type of the application. For example, the user moves all or part of tool applications to an interface corresponding to an office application, the moved tool applications can be considered as user-defined office applications. A standard classification of applications usually follows a habitual classification manner, for example, application type classification in the current application market.

In one implementation, a criterion for demarcating the first application and the second application is clarified further in the embodiment of the present disclosure as follows. The icon contained in the second interface is a second application icon. A usage frequency of the first application is higher than that of the second application.

It should be noted that, as mentioned above, the user can define whether an icon is the first application icon, therefore the usage frequency should not be understood as the only criterion for classifying the first application and the non- first application.

In one implementation, an updating manner of application icons is provided as follows. The terminal equipment further includes a counting unit 204 and an icon control unit 205.

The counting unit 204 and the icon control unit 205 can be a processor, a circuit, control components coupled to or integrated in the processor. The counting unit 204 and the icon control unit 205 can be disposed integrally or separately.

The counting unit 204 is configured to count a usage frequency of each application of the terminal equipment periodically.

The icon control unit 205 is configured to move an application icon associated with the second application from the first interface to the second interface according to an application type of the application; or move an application icon associated with the first application from the second interface to the first interface.

In the embodiment of the present disclosure, it is inadvisable to set a period of counting the usage frequency too short, generally it may be a week or a few days, and it is also possible to set a longer period. The above examples should not be understood as any limitation to the period of the embodiments of the present disclosure.

In one implementation, a solution to facilitate the user to access the second interface accurately is also provided. The displaying unit 201 is further configured to display a form after the application type selection icon is pressed. The form contains prompt information for prompting the application type of the second interface.

In one implementation, the receiving unit 202 is further configured to receive a selection operation of the prompt information for prompting the application type of the second interface.

In the embodiment of the present disclosure, by displaying the prompt information of the application type in the form as illustrated in FIG. 3, the user can find a corresponding application type accurately, a situation in which accessing of the second interface is failed since the user does not know the application type can be avoided.

Referring to FIG. 6, a terminal equipment 300 is provided in the embodiments of the present disclosure. The terminal equipment includes a processing unit 301 and an input-output unit 302. The processing unit 301 is configured to control and manage operations of the terminal equipment. For example, the processing unit 301 is configured to be operable with the terminal equipment to perform operations at block 101-103 in FIG. 1 and/or other processes of technologies described herein. The input-output unit 302 is configured to support data inputting and outputting. The data inputting can be acquisition of audio data, icon pressing and the like. The data outputting can be displaying interface of the screen, icons, interfaces and the like. The terminal equipment can also include a storing unit 303. The storing unit 303 is configured to store program codes and data of the terminal equipment.

The processing unit 301 can be a processor and a controller, for example, a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof. Various exemplary logical blocks, modules, and circuits described in conjunction with the disclosure may be achieved or implemented. The above-mentioned processor can also be a combination of computing functions, for example, a combination containing one or more microprocessors, a combination of a DSP and the micro-processor and the like. The input-output unit 302 can be a microphone, a handset, a speaker, a display and the like. The storing unit 303 can be a memory.

The processing unit 301 is configured to display a first interface. The terminal equipment includes the first interface and a second interface.

The first interface contains a first application icon(s) and an interface. The interface is configured for selecting an application type. The second interface is established according to an application type. The second interface contains an application icon(s) of the application type corresponding to the second interface.

The processing unit 301 is further configured to switch to the second interface, after an instruction for selecting the application type corresponding to the second interface is received.

The input-output unit 302 is configured to receive data and output data.

In this embodiment of the present disclosure, both the first interface and the second interface are interfaces of the terminal equipment rather than interfaces of applications. Generally speaking, the first interface may be a first interface displayed after the terminal equipment is powered on, and may be generally referred to as a main interface.

The first application is associated with a second application. A usage frequency of the first application is higher than that of the second application. Generally speaking, the first application refers to applications most frequently used of the terminal equipment. In addition, the first application icon may be an icon of a user-defined first application. For example, for applications that do not have the highest usage frequency but the user is accustomed to placing these application icons in the first interface, the user can move these icons to the first interface in a self-defined way. In this condition, the applications corresponding to these icons can also be considered as the first application, or these application icons can be considered as first application icons.

The type of applications can be user-defined, and can be a standard application classification, for example, office APP, games APP, social APP, tools APP and the like.

FIG. 2 illustrates an example of an interface of an embodiment of the present disclosure. The interface is the first interface and contains first application icons and an application type selection icon.

In the embodiment of the present disclosure, the second interface is a general term, that is, an interface containing a second application icon. Interfaces of second applications are distinguished according to categories of the second applications, therefore there can be more than one second interface.

In the embodiment of the present disclosure, the interface and the first application icon is provided in a first interface. The second interface is established according to the application type, therefore the second interface has enough space to accommodate second application icon. A user can access the first application through the first application icon quickly, and regarding the second applications, the user can search an interface corresponding to the second applications quickly through the interface, so as to find the second application icons quickly. Therefore speed to find the second applications is improved while user's operating habits of the first application are maintained, therefore, operational efficiency is improved.

In one implementation, a solution to facilitate the user to access the second interface accurately is also provided. The processing unit 301 is further configured to display a form after the application type selection icon is pressed. The form contains prompt information for prompting the application type of the second interface.

In the embodiment of the present disclosure, by displaying the prompt information of the application type in the form as illustrated in FIG. 3, the user can find a corresponding application type accurately, a situation in which accessing of the second interface is failed since the user does not know the application type can be avoided.

Other processes that the processing unit 301 is configured to perform can refer to the foregoing method embodiments and it will not be repeated in detail herein.

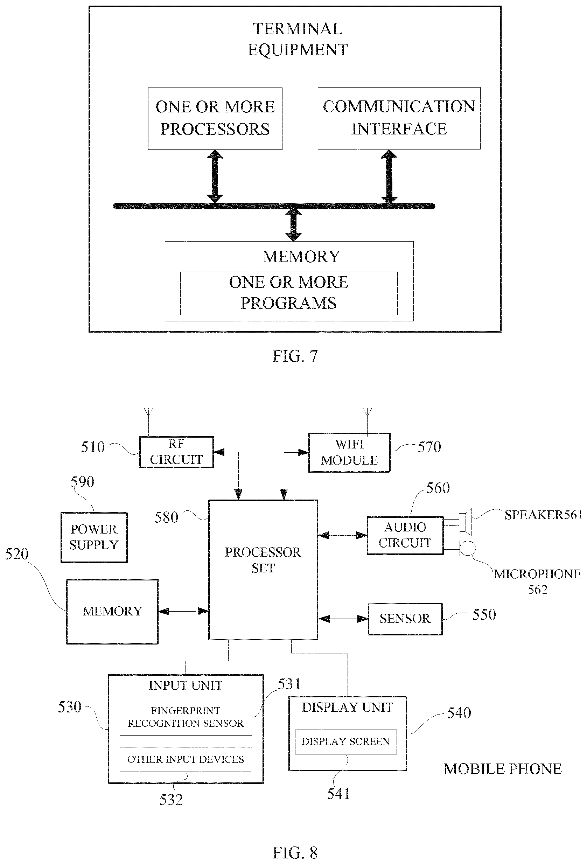

Referring to FIG. 7, FIG. 7 is a structure diagram of a terminal equipment of an embodiment of the present disclosure. As illustrated in FIG. 7, the terminal equipment includes one or more processors, a memory, a communication interface, and one or more programs. The one or more programs are stored in the memory and include instructions, which when executed, become operable with the one or more processors to execute following procedures.

A first interface is displayed by a terminal equipment. The terminal equipment includes the first interface and a second interface.

The first interface contains a first application icon(s) and an interface. The second interface is established according to an application type. The second interface contains an application icon(s) of the application type corresponding to the second interface.

The second interface is switched to after an instruction for selecting the application type corresponding to the second interface is received.

In this embodiment of the present disclosure, both the first interface and the second interface are interfaces of the terminal equipment rather than interfaces of applications. Generally speaking, the first interface may be a first interface displayed after the terminal equipment is powered on, and may be generally referred to as a main interface.

The first application is associated with a second application. A usage frequency of the first application is higher than that of the second application. Generally speaking, the first application refers to applications most frequently used of the terminal equipment. In addition, the first application icon may be an icon of a user-defined first application. For example, for applications that do not have the highest usage frequency but the user is accustomed to placing these application icons in the first interface, the user can move these icons to the first interface in a self-defined way. In this condition, the applications corresponding to these icons can also be considered as the first application, or these application icons can be considered as icons of first applications.

The type of applications can be user-defined, and can be a standard application classification, for example, office APP, games APP, social APP, tools APP and the like.

FIG. 2 illustrates an example of an interface of an embodiment of the present disclosure. The interface is the first interface and contains first application icons and an application type selection icon.

In the embodiment of the present disclosure, the second interface is a general term, that is, an interface containing a second application icon. Interfaces of second applications are distinguished according to categories of the second applications, therefore there can be more than one second interface.

In the embodiment of the present disclosure, the interface and the first application icon is provided in a first interface. The second interface is established according to the application type, therefore the second interface has enough space to accommodate second application icons. A user can access the first application through the first application icon quickly, and regarding the second applications, the user can search an interface corresponding to the second applications quickly through the interface, so as to find the second application icons quickly. Therefore speed to find the second applications is improved while user's operating habits of the first application are maintained, therefore, operational efficiency is improved.

In one implementation, an expression of the interface is also provided as follows. The interface includes an application type selection icon occupying one application icon location.

In the embodiment of the present disclosure, the application type selection icon occupies one application icon location, so that an overall interface layout will not be changed, user habits are more conformed, and the terminal equipment can be more easily used. The application type selection icon is named after a functional naming convention, so that any icon with an application type selection function and can indicate that this is an icon for application type selection, can be used. With regarding to the names of the icons, the disclosure is not limited thereto.

In one implementation, a specific form of the application type corresponding to the second interface is also provided as follows. The application type corresponding to the second interface includes at least one of: an application type determined according to a standard classification definition of applications, an application type determined according to a user-defined application type, and an application type determined according to both the standard classification definition of applications and the user-defined application type.

In the embodiment of the present disclosure, an interface is established according to an application type. The interface here refers to a main interface or an attached interface rather than an interface of an application. In addition, one application type usually corresponds to more than one application, multiple application icons may exist in one interface.

The user-defined application type does not always refer to that the user inputs information such as an application belongs to some kind of application. As long as the user inputs information that may lead to the application to be classified to an interface of an application type, it can be understood that the user defines a type of the application. For example, the user moves all or part of tool applications to an interface corresponding to an office application, the moved tool applications can be considered as user-defined office applications. A standard classification of applications usually follows a habitual classification manner, for example, application type classification in the current application market.

In one implementation, a criterion for demarcating the first application and the second application is clarified further in the embodiment of the present disclosure as follows. The icon contained in the second interface is a second application icon. A usage frequency of the first application is higher than that of the second application.

It should be noted that, as mentioned above, the user can define whether an icon is the first application icon, therefore the usage frequency should not be understood as the only criterion for classifying the first application and the non- first application.

In one implementation, an updating manner of application icons is provided as follows. The procedures further include the follows.

A usage frequency of each application of the terminal equipment is counted periodically.

An application icon associated with the second application is moved from the first interface to the second interface according to an application type of the application, or an application icon associated with the first application is moved from the second interface to the first interface.

In the embodiment of the present disclosure, it is inadvisable to set a period of counting the usage frequency too short, generally it may be a week or a few days, and it is also possible to set a longer period. The above examples should not be understood as any limitation to the period of the embodiments of the present disclosure.

In one implementation, a solution to facilitate the user to access the second interface accurately is also provided. The procedures can further include the follows after the application type selection icon is pressed. A form is displayed. The form contains prompt information for prompting the application type of the second interface.

In the embodiment of the present disclosure, by displaying the prompt information of the application type in the form as illustrated in FIG. 3, the user can find a corresponding application type accurately, a situation in which accessing of the second interface is failed since the user does not know the application type can be avoided.

The foregoing technical solutions of the embodiments of the disclosure are mainly described from the viewpoint of execution of the method. It can be understood that, in order to implement the above functions, the mobile terminal includes hardware structures and/or software modules corresponding to the respective functions. Those skilled in the art should readily recognize that, in combination with the exemplary units and scheme steps or operations described in the embodiments disclosed herein, the present disclosure can be implemented in hardware or a combination of hardware and computer software. Whether a function is implemented by way of hardware or computer software driving hardware depends on the particular application and design constraints of the technical solution. Those skilled in the art may use different methods to implement the described functions for each particular application, but such implementation should not be considered as beyond the scope of the present disclosure.

According to the embodiments of the disclosure, functional units may be divided for the mobile terminal in accordance with the foregoing method examples. For example, functional units may be divided according to corresponding functions, and two or more functions may be integrated into one processing unit. The above-mentioned integrated unit can be implemented in the form of hardware or software functional units. It should be noted that the division of units in the embodiments of the present disclosure is schematic and is merely a logical function division; there may be other division manners in actual implementation.

An embodiment of the present disclosure further provides another terminal equipment. As illustrated in FIG. 8, only parts related to the embodiments of the present disclosure are illustrated for ease of description. For technical details not described, reference may be made to the method embodiments of the present disclosure. The terminal equipment may be any terminal device, such as a mobile phone, a tablet computer, a personal digital assistant (PDA), a point of sale terminal (POS), an on-board computer and the like. The following describes the mobile phone as an example of the terminal equipment.

FIG. 8 is a block diagram of a part of a structure of a mobile phone related to a mobile terminal according to an embodiment of the present disclosure. As illustrated in FIG. 8, the mobile phone includes a RF (radio frequency) circuit 510, a memory 520, an input unit 530, a display unit 540, a sensor 550, an audio circuit 560, a Wi-Fi (wireless fidelity) module 570, a processor set 580, a power supply 590 and other components. Those skilled in the art can understand that the structure of the mobile phone illustrated in FIG. 8 does not constitute any limitation on a mobile phone. The mobile phone configured to implement technical solutions of the disclosure may include more or fewer components than illustrated or may combine certain components or different components.

In the following, various components of the mobile phone will be described in detail with reference to FIG. 8.

The RF circuit 510 may be configured to receive and transmit information. Generally, the RF circuit 510 includes, but is not limited to, an antenna, at least one amplifier, a transceiver, a coupler, a Low Noise Amplifier (LNA), a duplexer and on the like. In addition, the RF circuit 510 may further communicate with other devices via wireless communication and a network. The wireless communication may use any one communication standard or protocol, including, but not limited to, Global System of Mobile communication (GSM), General Packet Radio Service (GPRS), Code Division Multiple Access (CDMA), Wideband Code Division Multiple Access (WCDMA), Long Term Evolution (LTE), E-mail, Short Messaging Service (SMS) and so on.

The memory 520 may be configured to store software programs and modules, and the processor 580 executes various function applications and data processing of the mobile phone by running the software programs and the modules stored in the memory 520. The memory 520 may mainly include a program storage region and a data storage region, the storage program region may store an operation system, application programs needed for at least one function (a power manager service (PMS) wake-up function, a fingerprint data acquisition function, a feature point matching function, and a display lighting function) and so on; and the data storage region may store data (such as fingerprint data obtained by a fingerprint recognition sensor, prestored preset quick unlocking period, statistical information of screen-off unlocking period and so on) created according to use of the mobile phone. In addition, the memory 520 may include a high-speed RAM, and may further include a non-volatile memory such as one of at least a disk storage device, a flash device, or other non-volatile solid storage devices.

The input unit 530 may be configured to receive input digital or character information and generate key signal input associated with user setting and functional control of the mobile phone. As one implementation, the input unit 530 may includes a fingerprint recognition sensor 531 and other input devices 532. The fingerprint recognition sensor 531 may collect fingerprint data of a user thereon. The input unit 530 may further include other input devices 532. As one implementation, the other input devices 532 may include, but not limited to, one or more of a touch screen, a physical key, a function key (such as a volume control key, a switch key, etc.), a trackball, a mouse, a joystick and the like.

The display unit 540 may be configured to display information input by the user or information provided for the user or various menus of the mobile phone. The display unit 540 may include a display screen 541, and alternatively, the display screen 541 may be configured in the form of a Liquid Crystal Display (LCD), an Organic Light-Emitting Diode (OLED) and so on. Although the fingerprint sensor 531 and the display screen 541 are illustrated as two separate components in FIG. 8 to realize the input and output functions of the mobile phone, in some embodiments, the fingerprint sensor 531 may be integrated with the display screen 541 to implement the input and output functions of the mobile phone.

The mobile phone may further include at least one sensor 550, such as a light sensor, a motion sensor, and other sensors. Specifically, the light sensor may include an ambient light sensor and a proximity sensor; the ambient light sensor may adjust the luminance of the display screen 541 according to the brightness of ambient light, and the proximity sensor may turn off the display screen 541 and/or backlight when the mobile phone reaches nearby the ear. As a kind of motion sensor, an accelerometer sensor may detect the magnitude of an accelerated speed in each direction (generally, three-axis); when stationary, the accelerometer sensor can detect the magnitude and direction of a gravity; the accelerometer sensor may be configured to identify an application of a mobile phone gesture (e.g., horizontal and vertical screen switching, relevant games, and magnetometer gesture calibration), and vibration recognition related functions (e.g., pedometer and knocking) and the like. Other sensors such as a gyroscope sensor, a barometer sensor, a hygrometer sensor, a thermometer sensor, an infrared sensor, and other sensors configurable for the mobile phone will not be elaborated herein.

The audio circuit 560, a loudspeaker 561, and a microphone 562 may provide an audio interface between the user and the mobile phone. The audio circuit 560 may convert received audio data into electric signals and transmit the electric signals to the loudspeaker 561, and the loudspeaker 561 converts the electric signals into sound signals to output. Besides, the microphone 562 converts collected sound signals into electric signals, the audio circuit 560 receives and converts the electric signals into audio data; the audio data is output to the processor 580 for processing and the processed audio data is transmitted to another mobile phone via the RF circuit 510, or the audio data is output to the memory 520 for further processing.

Wi-Fi belongs to a short-range wireless transmission technology. With aid of the Wi-Fi module 570, the mobile phone may assist the user in E-mail receiving and sending, webpage browsing, access to streaming media and the like. Wi-Fi provides users with wireless broadband Internet access. Although the Wi-Fi module 570 is illustrated in FIG. 8, the Wi-Fi module 570 is not essential to the mobile phone and can be omitted according to actual needs without departing from the essential nature of the present disclosure.

The processor 580 is a control center of the mobile phone, and is configured to connect all parts of the whole mobile phone by utilizing various interfaces and lines, to run or execute the software program and/or the module stored in the memory 520 and call data stored in the memory 520 to execute various functions and processing data of the mobile phone, so as to wholly monitor the mobile phone. Alternatively, the processor 580 may include one or more processing units. The processor 580 may be integrated with an application processor and a modulation-demodulation processor, the application processor mainly processes an operation system, a user interface, an application program and the like, and the modulation-demodulation processor mainly processes wireless communication. It should be understood that the modulation-demodulation processor may not be integrated into the processor 580.

The mobile phone may further include a power supply 590 (such as a battery) for supplying power to each component. The power supply may be connected with the processor 580 logically via a power supply management system, so as to implement functions of charging, discharging, and power consumption management by means of the power supply management system.

The mobile phone may further include a camera, a Bluetooth module and the like, which are not illustrated, and will not be elaborated herein.

The method of the foregoing embodiments illustrated in FIG. 1 can be realized based on the structure of the mobile phone.

The functions of the units illustrated in FIG. 5~6 can be achieved based on the structure of the mobile phone.

The embodiments of the present disclosure also provide a computer readable storage medium. The computer readable storage medium stores computer programs for electronic data interchange which, when executed, being operable with a computer to accomplish all or part of the operations of any of the methods described in the above-described method embodiment. The computer can be a terminal equipment or other equipment.

The embodiments of the present disclosure also provide a computer program product. The computer program product includes a non-transitory computer readable storage medium storing computer programs. The computer programs are operable with a computer to perform all or part of the operations of any of the methods described in the above method embodiments. The computer program product may be a software installation package. The computer can be a terminal equipment or other equipment.

It is to be noted that, for the sake of simplicity, the foregoing method embodiments are described as a series of action combinations, however, it will be appreciated by those skilled in the art that the present disclosure is not limited by the sequence of actions described. According to the present disclosure, certain steps or operations may be performed in other order or simultaneously. Besides, it will be appreciated by those skilled in the art that the embodiments described in the specification are exemplary embodiments and the actions and modules involved are not necessarily essential to the present disclosure.

In the foregoing embodiments, the description of each embodiment has its own emphasis. For the parts not described in detail in one embodiment, reference may be made to related descriptions in other embodiments.

In the embodiments of the disclosure, the apparatus disclosed in embodiments provided herein may be implemented in other manners. For example, the device/apparatus embodiments described above are merely illustrative; for instance, the division of the unit is only a logical function division and there can be other manners of division during actual implementations, for example, multiple units or components may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection, mechanical connection, or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the embodiments.

In addition, the functional units in various embodiments of the present disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the steps described in the various embodiments of the present disclosure. The memory includes various medium capable of storing program codes, such as a USB (universal serial bus) flash disk, a read-only memory (ROM), a random-access memory (RAM), a removable hard disk, Disk, compact disc (CD), or the like.

It will be understood by those of ordinary skill in the art that all or a part of the various methods of the embodiments described above may be accomplished by means of a program to instruct associated hardware, the program may be stored in a computer-readable memory, which may include a flash memory, a read-only memory (ROM), a random-access memory (RAM), Disk or compact disc (CD), and so on. While the present disclosure has been described in detail above with reference to the exemplary embodiments, the scope of the present disclosure is not limited thereto. As will occur to those skilled in the art, the present disclosure is susceptible to various modifications and changes without departing from the spirit and principle of the present disclosure. Therefore, the scope of the present disclosure should be determined by the scope of the claims.

## Claims

1. A method for searching an application, comprising:
displaying (101), by a terminal equipment, a first interface, the terminal equipment comprising the first interface and a second interface;
the first interface containing a first application icon and an interface; the interface being configured for selecting an application type; the second interface being established according to an application type and containing an application icon of the application type corresponding to the second interface;
receiving (102) an instruction for selecting the application type corresponding to the second interface; and
switching (103) to the second interface.

2. The method of claim 1, wherein the interface comprises:
an application type selection icon occupying one application icon location.

3. The method of claim 2, further comprising:
after the application type selection icon is pressed, displaying a form, the form containing prompt information for prompting the application type of the second interface.

4. The method of claim 3, wherein the receiving an instruction for selecting the application type corresponding to the second interface comprises:
receiving a selection operation of the prompt information for prompting the application type of the second interface.

5. The method of any of claims 1 to 4, wherein the application type corresponding to the second interface comprises at least one of:
an application type determined according to a standard classification definition of an application;
an application type determined according to a user-defined application type; and
an application type determined according to both the standard classification definition of an application and the user-defined application type.

6. The method of any of claims 1 to 5, wherein the icon contained in the second interface is a second application icon; and
an second application being associated with an first application.

7. The method of claim 6, wherein a usage frequency of the first application is higher than that of the second application.

8. The method of claim 7, further comprising:
counting a usage frequency of each application of the terminal equipment periodically; and
moving an application icon associated with the second application from the first interface to the second interface according to an application type of the application; or moving an application icon associated with the first application from the second interface to the first interface.

9. A terminal equipment, comprising:
a processor coupled to a memory configured to store instructions, which when executed by the processor, become operable with the processor to execute the following units:
a displaying unit (201), configured to display a first interface, the terminal equipment comprising the first interface and a second interface;
a receiving unit (202), configured to receive an instruction for selecting the application type corresponding to the second interface;
a switching unit (203), configured to switch to the second interface; and
the first interface containing a first application icon and an interface; the interface being configured for selecting an application type; the second interface being established according to an application type and containing an application icon of the application type corresponding to the second interface.

10. The terminal equipment of claim 9, wherein the interface comprises:
an application type selection icon occupying one application icon location.

11. The terminal equipment of claim 10, wherein the displaying unit is further configured to display a form; and the form containing prompt information for prompting the application type of the second interface.

12. The terminal equipment of claim 11, the receiving unit is further configured to receive a selection operation of the prompt information for prompting the application type of the second interface.

13. The terminal equipment of any of claims 9 to 12, wherein the application type corresponding to the second interface comprises at least one of:
an application type determined according to a standard classification definition of an application;
an application type determined according to a user-defined application type; and
an application type determined according to both the standard classification definition of an application and the user-defined application type.

14. The terminal equipment of any of claims 9 to 13, wherein the icon contained in the second interface is a second application icon; and
an second application being associated with an first application.

15. The terminal equipment of claim 14, wherein a usage frequency of the first application is higher than that of the second application.
